# EUROPEAN PATENT SPECIFICATION

(11) **EP 1 395 006 B1**
(45) Date of publication and mention of the grant of the patent: **21.02.2007**
(21) Application number: 02354123.8
(22) Date of filing: 29.08.2002
(51) Int. Cl.: H04L 12/58, H04L 12/18

(54) **Method and apparatus for data distribution through a network**
Verfahren und Vorrichtung zur Datenverteilung in einem Netzwerk
Procédé et dispositif pour la distribution de données dans un réseau

(43) Date of publication of application: 03.03.2004
(73) Proprietor: Hewlett-Packard Company, Palo Alto, CA 94304 (US)
(72) Inventor: Richard, Bruno, 38920 Crolles (FR)
(74) Representative: Lloyd, Richard Graham

(56) References cited:
- US-A- 5 850 396

## Description

### Technical field of the invention

The invention relates to data communication and more particularly to a process for disseminating or distributing data through a network.

### Background art

The constant progress of the telecommunication systems, particularly with the explosion of the Internet and intranet networks, has resulted in the development of an era of information. With a single personal computer, it is possible to get a connection to the Internet network, and have direct access to a wide range of information, services and electronic documentation. More and more publishers provide on-line electronic documentation, books, reviews and all sorts of electronic media files to customers connected to the network.
As the size of the Internet or a private intranet network increases, the need for distributed replication of an electronic file increases also. This capability is essential in a wide variety of situations. For instance, this is required when deploying large execution sets on all the machines of a cluster is planned and also the numerous situations of replication of web data from a Web server to Web caches. When a new version of an operating system or other program is made available there is an enormous need for quick replication of the software on a large number of different machines, which needs to be achieved without excessive stress on the web server and the telecommunication network.
Generally speaking, the transmission of a given file and its replication at different locations within a network is normally performed in a master/slave mode, that is to say in a manner which concentrates the burden of the file copy on one central distribution point. In most situations, when the size of the electronic file to be transmitted is significant, and when there are a large number of recipients, this results in stress on both the master device - e.g. a web server - and also on the network. As an illustration, should one file of 500 Kbytes be provided to a number of 1000 recipients by one web server, the replication of the 1000 files will entail a traffic of 500 Mbytes for that server and for the communication path.

A technique known as *IP multicast,* such as that described in US 5,850,396 can in some circumstances be used to improve the situation but this, however, is not available on the public Internet network, because currently most routers do not support the Internet Group Management Protocol (IGMP). Also, in the case of US 5,850,396, the multicast message is distributed according to a polynomial expansion technique which still loads a relatively large number of downstream nodes in the network.

The use of a proxy can in some circumstances relieve both the publisher of the electronic file and the network. As is well known, a proxy device functions to avoid direct connection from one machine - generally within an Intranet network - to another machine being outside the Intranet network. The communication between the first and the second machine is achieved via the proxy which receives and forward all the requests on behalf of the former to the latter.

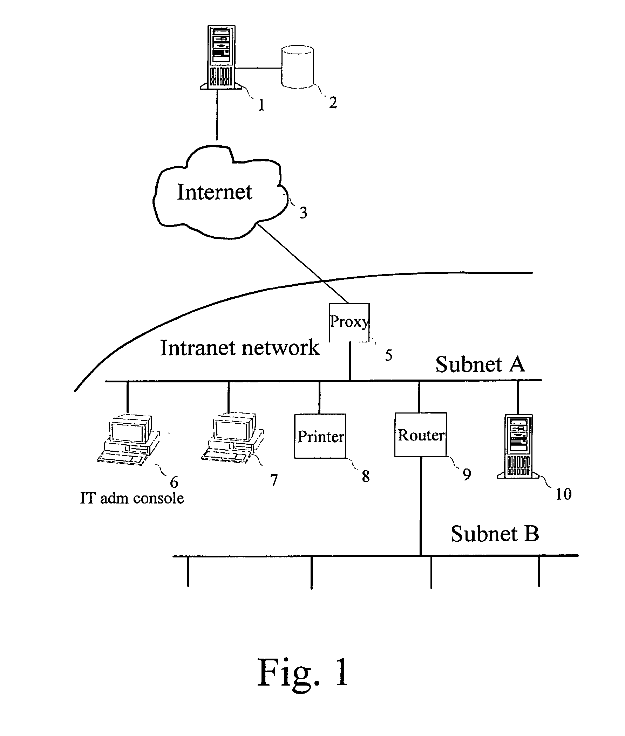

Figure 1 illustrates the topology of a Intranet network which comprises a set of network devices - e.g. a router 9 allowing communication between a first subnetwork A and a second subnetwork B comprised within the Intranet, but also the computers 6 and 7, a printer 8 and an intranet server 10. All the network devices of the Intranet communicate with the Internet network 3 via a proxy element 5 allowing interface between the boundary of the Intranet and the Internet. It can therefore be seen that when a proxy is arranged within an Intranet network of a private organization for instance, all the requests from the machines of that Intranet network are first forwarded to the proxy, which accesses the remote machines and returns the results to the original requestor. Typically proxies are linked with other functionality, in particular the caching of web pages to reduce traffic so that one electronic file requested by a great number of machines belonging to one Intranet network is directly available without requiring multiple download operations from the publisher of the electronic files. Therefore, if one device - e.g. computer 6 requests one electronic file from an external web server 1, the latter can be cached within Proxy 5 for later diffusion within the Intranet.

### Summary of the invention

This invention is directed to a process for distributing through a network an electronic message associated with a list of recipients, said process comprising the iterated application of the steps of:
a) extracting, at a node of the network, from said list a first sublist and a second sublist of recipients;
b) identifying a recipient within said first sublist which can be addressed via said network, and
c) transmitting said electronic message and said first sublist to said identified recipient for onward distribution; and
d) applying, at said node, said steps (a) to (d) to said second sublist of recipients.

The process can also comprise receiving the message and a list of recipients for onward distribution. The above described process can thus be carried out in a plurality of nodes of the network upon receipt at each node of the message and an associated first sublist generated in another of the nodes until the message has been transmitted to all recipients on the list.

This process permits the burden of the transmission of the electronic document to be shared between different recipients, each of which reapplies the same process and reiterates using the original list of recipients until the electronic file or document is completely processed and transmitted to every recipient. Preferably, the two sublists are arranged to have a similar size and together comprising all the recipients listed in the list of recipients.
In at least preferred embodiments, said message and the list of recipients are contained in a package, the step of transmitting the electronic message to the identified recipient comprising generating a new package comprising the electronic message and the first list. The package can be an XML document for instance, and can comprise information defining the size and the date of creation of said electronic message.
In one embodiment, the transmission of the electronic package comprising the sublist is achieved via an HTTP channel, thus allowing easy transmission through the proxy of the Intranet networks.
In one embodiment, the process is executed by an agent as claimed in claim 12 which is embodied by a computer program having its own installation procedure. Alternatively, the agent can be a specific component of an operating system allowing effective publishing functionality.
The invention provides a computer program product which permits distribution or flooding of the information throughout a telecommunication network, such as an Internet/intranet network for instance.
In a further aspect, the invention provides a computer program product as claimed in claim 14.
In yet a further aspect, the invention provides for a data communications network as claimed in claim 16.

### Description of the drawings

An embodiment of the invention will now be described, by way of example only, with reference to the accompanying drawings, wherein:
Figure 1 illustrates a network including a a proxy system.
Figure 2a and 2b respectively illustrate a computer system for performing a distribution process and a distribution control agent 25.
Figure 3 illustrates the topology of five computers providing the distribution of an electronic file.
Figure 4 illustrates the process executed by a publisher.

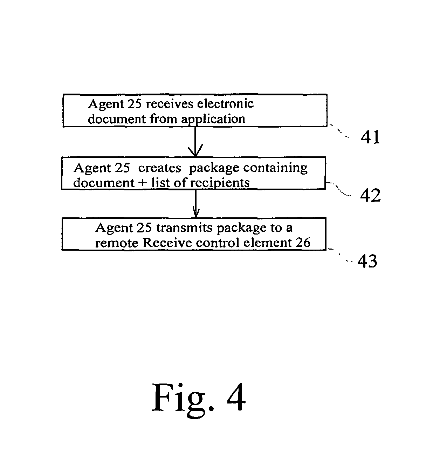

Figure 4 illustrates the process executed by a publisher.

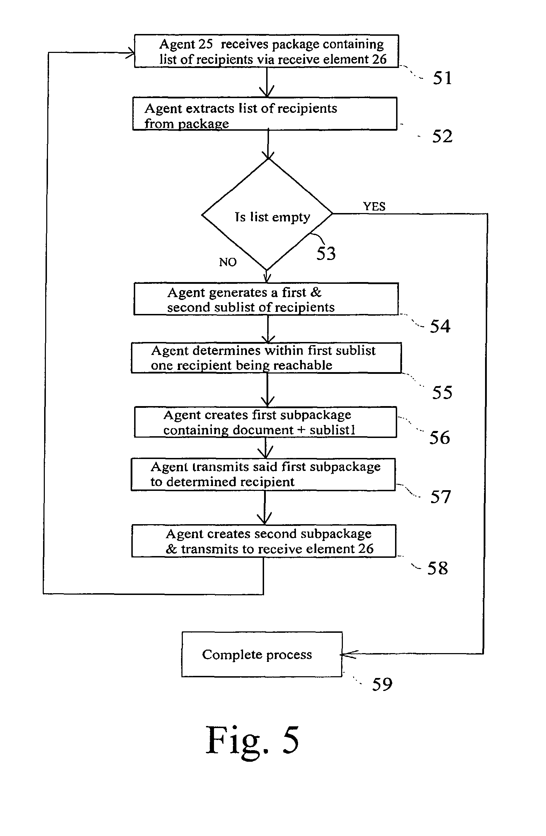

Figure 5 illustrates the process executed by a control agent of a network device.

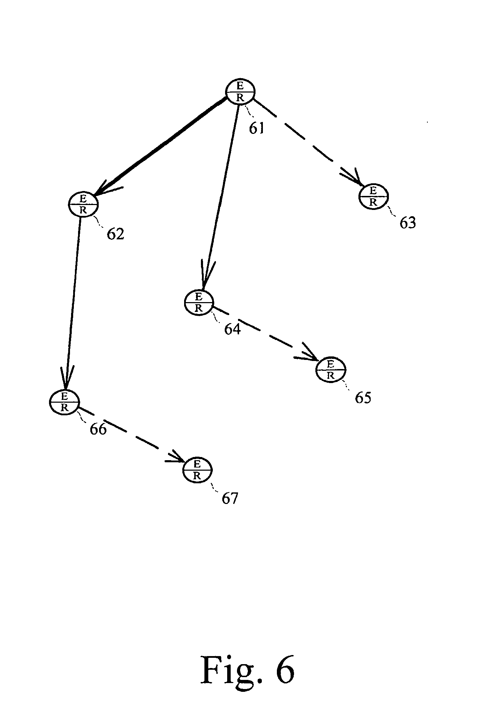

Figure 6 illustrates the execution of the process on a topology of eight devices.

### Description of the preferred embodiment of the invention

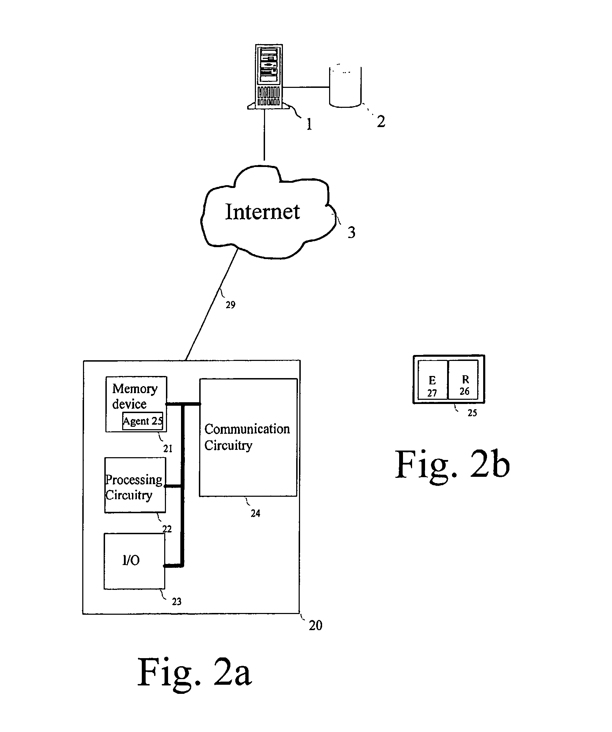

With reference to figure 2a there is shown a block diagram of a system which permits distribution of electronic files. The system is illustrated as residing within a computer system 20 which may be a personal computer or any conventional suitably arranged computer system. The system is arranged to use existing electronic circuitry to perform the functions which will be described hereinafter.

The computer 20 is illustrated as including a memory device 21 which may be a random access memory (RAM), Read-Only-Memory (ROM), a conventional mass storage, such as a hard disk drive or the like. The memory device 21 is conventionally capable of storing any type of data, but is is particularly used in the present situation for achieving local replication of electronic files or electronic messages as will be explained hereinafter with details. In the following the term electronic messages will be used for simplicity to refer to the data that is to be disseminated within the network in whatever form and which may be received and stored within the memory device 21. In typical applications this data may be for instance be files such as word processed or other documents, program files or media files (mp3, asx, pdf) files in accordance with known standard formats, but the application of the techniques described is not limited to any particular type of file, message or data. For instance, the process would be particularly useful for distributing media files such as electronic newspapers which need to be disseminated very rapidly. The mass storage may usefully be arranged to include a specific storage area (not shown) which is reserved for receiving the electronic files received and stored in accordance with the process which will be described with reference to figures 4 and 5.

The computer 20 is further illustrated as including processing circuitry 22 which generally governs the flow of software instructions and data within the computer system. In figure 2, the processing circuitry 22 is particularly arranged to provide read/write access to the memory device 21. Computer 20 further includes conventional input/output devices 23.

Computer 20 further comprises communication circuitry 24. The communication circuitry 24 may be, for instance, a modem allowing the computer 20 to communicate via a telecommunication network, such as an Internet network 3. It should be understood, however, that the type of communication circuitry with which computer 20 communicates with the Internet network - for instance to access a web server 1 with a database 2 - is not important. In the case of an Internet connection, a TCP/IP communication layer is provided for supporting the communication layers which are involved in the communication steps of the process described herein. In most cases, the access to the Internet network is achieved via the World Wide Web via the well-known Hyper Text Transfer Protocol (HTTP). While HTTP is very useful, particularly because it is well adapted to the use of firewalls, any other kind of protocol allowing communication via the network can equally be used.

In addition to the conventional software components which are used for controlling the processing circuitry 22, and which generally includes the operating system and a set of application software, the computer 20 is provided with a distribution control agent 25 which consists of a set of processing instructions stored within the memory 21 and which are used for controlling the sequence of operations which will be described below.

In this embodiment, the distribution control agent 25 is a specific software component provided with and embedded within the operating system installed within the machine. However, it will be understood that the functions described may be adapted to other configurations, such as in the form of a separately installed application program.

In this embodiment, distribution control agent 25 comprises two distinctive components: an emitter element 27 associated with a receiver element 26, as shown in figure 2b. The emitter element 27 is arranged to communicate with corresponding receiver elements 26 of other computers which are accessible via the network.

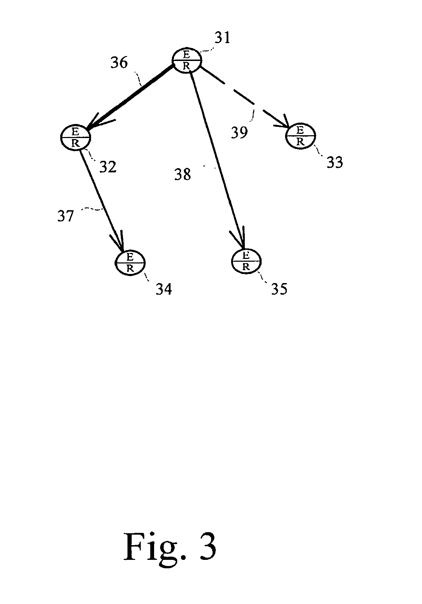

With respect to figures 3 and 4 there will now be described the process for distributing a message. Computer 31 - including a distribution control agent 25 with one emitter (E) element and one receiver (R) element - is assumed to transmit an electronic message to a set of recipients including recipient 32, 33, 34 and 35 shown in the figure 3. Recipients 32, 33, 34 and 35 are generally conventional computers such as illustrated in figure 2, but could also be more specific network devices allowing Internet access, such as mobile telephones, communicating wrist watches or similar appliaces, for instance. It is assumed that any device can communicate via any other device through the network, which is generally the case when each device is configured as a network node provided with an Internet Protocol (IP) address.

Figure 4 more particularly shows the processing steps which are involved for achieving distribution of the messages. This process is launched by publishing server 31, for instance.

In a step 41, distribution control agent 25 receives an electronic message to be distributed, the latter being accompanied by a list of recipients (e.g. nodes 32-35 of figure 3). As mentioned above, the electronic message can be received from an application program running within the computer.

Upon reception of the message accompanied by the list of recipients, Agent 25 creates in a step 42 an electronic package containing the message to be distributed and the above mentioned list of recipients. In the case of a TCP/IP network, the recipients are defined by the IP addresses or by the email addresses. Preferably, the electronic package which is created at step 42 is an XML file which complies with the standard eXtended Mark-up Language structure and which is associated with a Document Type Definition (DTD) file. The XML file preferably comprises additional information such as the date of creation of the electronic file.

In a step 43, Agent 25 forwards the XML package to its receive control element 26 for further processing.

The processing which follows after step 43 is the general distribution processing which is depicted in figure 5 and which will now be described in detail.

The process is launched when the receive control element 26 of agent 25 receives in a step 51 an XML package which is to be processed.

Step 51 is then followed by a step 52 where agent 25 reads the container comprising the package and extracts the list of recipients therein included. If necessary, Agent 25 then removes itself from the list of recipients (not shown).

In a step 53, the agent 25 performs a test to determine whether the list of recipients is empty, in which case, the process proceeds to a step 59 which is the completion of the process.

However, in the general case, the list of recipients is not empty, and the process proceeds to a step 54 where agent 25 computes from the list of remaining recipients received in step 51 a set of two distinctive sublists: a first and a second sublist. First and second sublists share no common element and their joining permits the original list of recipients which was included within the original package to be regenerated. In one embodiment, the two sublists are arranged to have substantially the same size. More particularly, in the preferred embodiment, the first list has a number of elements which is set to be equal to the integer which is immediately superior to half the number of recipients of the original list. With respect to the scheme of figure 3, it can be seen that sublist 1 can include nodes 32 and 34, while sublist 2 includes nodes 33 and 35. In the particular case where the list is limited to a single recipient, the process divides the list into a first and a second list, the second one being empty.

In a step 55, agent 25 determines via transmit control element 27 one particular recipient within the first sublist which can receive a notification via the network, for instance node 32 of sublist 1. Different methods and means can be arranged for achieving the above determination. Preferably, agent 25 issues a PING command to determine whether any particular recipient is available on the network.

When the above determination completes, the agent 25 generates in a step 56 a first subpackage comprising the original electronic document to distribute, accompanied with the first sublist within an XML file which is formatted in a similar fashion to the original electronic package which was created in step 42 of figure 4. In the example of figure 3, it can be seen that first sublist includes nodes 32 and 34. While figure 5 clearly illustrates that the determination of the particular recipient (step 55) precedes the generation of the electronic package, it should be noted that the generation of the electronic package could be carried out before the determination of the appropriate recipient to which the package will have to be transmitted.

In a step 57, the first subpackage is then forwarded to the transmit control element 27 for further propagation through the network to the recipient which was identified in step 54. This transmission is particularly illustrated in figure 3 by arrow 36 showing the propagation of the first subpackage from node 31 (the publishing node) and node 32. Preferably, the HTTP protocol is used for this transmission to facilitate the transmission through firewalls. Alternatively, this transmission can be achieved via the File Transfer Protocol or any other suitable protocol. Once the recipient receives the first subpackage, the latter will correspondingly initiate the general distribution process of figure 5.

In a step 58, agent 25 generates a second subpackage comprising the original electronic document or message, accompanied by the second sublist, which is formatted within a XML file and forwarded to the receive control element 26 of the same node and same agent. In the example drawn in figure 3, it can be seen that the second package has a second sublist including nodes 33 and 35.

The process then proceeds back to step 51 for the purpose of processing this new electronic package in accordance with the sequence of steps 51-58 which were described above. This permits a new pair of sublists to be computed, respectively a sublist containing node 35 and a second sublist containing node 33 permitting later transmission of the electronic file. Node 31 will therefore successively transmit the electronic document to node 35 (arrow 38) and then to node 33 (arrow 39). Node 34 will directly receive the electronic file from a direct transmission (arrow 37) from node 32.

It should be noted that the process of figure 5 which was described in detail above, is executed in each agent of the different machines which are involved in the distribution process and which receive the package. Therefore, the process is successively executed in the different recipients until the full distribution of the original document or file is achieved. Further, it can be seen that the number of replications of the original electronic documents is shared between the different recipients (ie nodes 31 and 32 in figure 3) of the different consecutive sublists which are computed. Neither the originating publishing server, nor the network is disproportionately stressed or loaded by the distribution of the document, even if a great number of recipients is to be reached.

More particularly, it can be seen that the number of successive downloads which is to be managed and handled by the publishing server is decreased in a ratio of log2 with respect to the number of machines which are to receive the original message. This can be seen with more clarity in figure 6 illustrating the process for 7 nodes. Assuming that the original list of recipients includes nodes 61, 62, 63, 64, 65, 66 and 67, it can be seen that the first sublist which is generated in step 54 of figure 5 comprises nodes 62, 66 and 67 while the second sublist which is generated includes 61, 63, 64 and 65. When the first subpackage (containing the first sublist) is transmitted to node 62, the originating node 61 only has to process a second subpackage comprising a second sublist which is reduced to contain nodes 61, 63, 64 and 65.

At the next loop, when node 61 receives the second subpackage, a new iterative process is executed, what results in the computation of a new set of two subpackages, respectively containing nodes 64-65 and nodes 63, and the transmission of the former for further processing to node 64. It can then be seen that node 61 no longer has to transmit the electronic file to node 65 because node 65 receives the message via from the processing of the above mentioned subpackage by node 64.

While the invention was particularly described with reference with a computer, it should be clear that the process may be adapted to any device which can communicate with the network, and which can receive an electronic message. Such devices may include mobile telephones and more generally any device which can be fitted with a distribution control agent, such as agent 25, for the purpose of executing the steps of process illustrated in figure 4 and 5.

## Claims

1. Process for distributing through a network an electronic message associated with a list of recipients, said process comprising the iterated application of the steps of :
a) extracting (54) at a node (61) of the network from said list a first sublist and a second sublist of recipients;
b) identifying (55) a recipient within said first sublist which can be addressed via said network, and
c) transmitting (56) said electronic message and said first sublist to said identified recipient for onward distribution; and the process being **characterised in that**
d) at said node (61), said steps (a) to (d) are applied to said second sublist of recipients.

2. Process as claimed in claim 1 comprising receiving (51) the message and a list of recipients for onward distribution.

3. Process according to claim 1 or claim 2 wherein said message and the list of recipients are contained in a package, the step of transmitting the electronic message to the identified recipient (57) comprising generating a new package comprising the electronic message and the first sublist.

4. Process as claimed in claim 3 wherein the package is an XML document.

5. Process according to claim 4 wherein said electronic package comprises information defining the size and the date of creation of said electronic message.

6. Process according to any preceding claim wherein the extraction (54) of said first and second sublist results in the generation of sublists of similar size.

7. Process as claimed in any preceding claim wherein the first and second sublists together comprise all the recipients listed in the list of recipients from which they are extracted in step (a).

8. Process according to any preceding claim wherein said transmission of the electronic message is performed via a Hyper-Text Transfer Protocol link.

9. Process as claimed in any preceding claim wherein the iterated steps (a) to (d) are carried out in a single node of the network.

10. Process for distributing an electronic message associated with a list of recipients through a network comprising carrying out a process as claimed in any preceding claim in a plurality of nodes of the network upon receipt at each one of the plurality of nodes of the message and an associated first sublist extracted in another of the nodes until the message has been transmitted to all recipients on the list.

11. Process according to claim 1 wherein the size of the first sublist is equal to the integer which is immediately superior than half the number of items of the list of recipients.

12. Publishing agent in the form of a computer program having program code elements for carrying out the process defined in any of claims 1 to 11.

13. Computer program in accordance with claim 12 embedded as a component of an operating system.

14. Computer program product comprising program code elements for distribution or flooding of an electronic file or document through a telecommunication network, and arranged to execute the steps of:
(a) generating (41) a package comprising said electronic document or file accompanied by a list of recipients;
(b) transmitting (43) said package to a first recipient;
(c) said first recipient extracting said list of recipients and computing a first sublist and a second sublist of recipients;
(d) generating (54) a first subpackage comprising said electronic file or document with said first sublist and transmitting said first subpackage to a second recipient which is identified from said first sublist; **characterised in that**
(e) a second subpackage comprising said electronic file or document with said second sublist is generated (58) and said second subpackage is processed by said first recipient iteratively according to steps (c) to (e).

15. Computer program product as claimed in claim 14 further arranged to execute the steps of:
(b') receiving (51) at the first recipient said package comprising said electronic document or file accompanied with a list of recipients; and wherein in step (d) the second recipient is identified from said first sublist as being reachable,

16. A data communications network wherein at least a subset of nodes comprise program code elements for carrying out a process as claimed in any of claims 1 to 11.

## Patentansprüche

1. Prozess zum Verteilen einer elektronischen Nachricht, die einer Liste von Empfängern zugeordnet ist, durch ein Netz, wobei der Prozess die wiederholte Anwendung folgender Schritte aufweist:
a) Extrahieren (54) einer ersten Teilliste und einer zweiten Teilliste von Empfängern aus der Liste an einem Knoten (61) des Netzes;
b) Identifizieren (55) eines Empfängers innerhalb der ersten Teilliste, der über das Netz adressiert werden kann; und
c) Senden (56) der elektronischen Nachricht und der ersten Teilliste an den identifizierten Empfänger zur Weiterverteilung; und wobei der Prozess **dadurch gekennzeichnet ist, dass**
d) an dem Knoten (61) die Schritte (a) bis (d) bei der zweiten Teilliste von Empfängern angewendet werden.

2. Prozess gemäß Anspruch 1, der ein Empfangen (51) der Nachricht und einer Liste von Empfängern zur Weiterverteilung aufweist.

3. Prozess gemäß Anspruch 1 oder 2, bei dem die Nachricht und die Liste von Empfängern in einem Paket enthalten sind, wobei der Schritt des Sendens der elektronischen Nachricht an den identifizierten Empfänger (57) ein Erzeugen eines neuen Pakets aufweist, das die elektronische Nachricht und die erste Teilliste aufweist.

4. Prozess gemäß Anspruch 3, bei dem das Paket ein XML-Dokument ist.

5. Prozess gemäß Anspruch 4, bei dem das elektronische Paket Informationen aufweist, die die Größe und das Erzeugungsdatum der elektronischen Nachricht definieren.

6. Prozess gemäß einem der vorhergehenden Ansprüche, bei dem die Extraktion (54) der ersten und zweiten Teilliste zur Erzeugung von Teillisten ähnlicher Größe führt.

7. Prozess gemäß einem der vorhergehenden Ansprüche, bei dem die erste und die zweite Teilliste zusammen alle Empfänger aufweisen, die in der Liste von Empfängern aufgelistet sind, aus der dieselben bei Schritt (a) extrahiert werden.

8. Prozess gemäß einem der vorhergehenden Ansprüche, bei dem die Übertragung der elektronischen Nachricht über eine Hypertextübertragungsprotokollverbindung durchgeführt wird.

9. Prozess gemäß einem der vorhergehenden Ansprüche, bei dem die wiederholten Schritte (a) bis (d) bei einem einzigen Knoten des Netzes ausgeführt werden.

10. Prozess zum Verteilen einer elektronischen Nachricht, die einer Liste von Empfängern zugeordnet ist, durch ein Netz, der ein Ausführen eines Prozesses gemäß einem der vorhergehenden Ansprüche bei einer Mehrzahl von Knoten des Netzes auf einen Empfang der Nachricht und einer zugeordneten ersten Teilliste, die bei einem anderen der Knoten extrahiert wird, an jedem der Mehrzahl von Knoten hin aufweist, bis die Nachricht an alle Empfänger auf der Liste gesendet worden ist.

11. Prozess gemäß Anspruch 1, bei dem die Größe der ersten Teilliste gleich der Ganzzahl ist, die unmittelbar der Hälfte der Anzahl von Elementen der Liste von Empfängern übergeordnet ist.

12. Veröffentlichungsagent in Form eines Computerprogramms, das Programmcodeelemente zum Ausführen des Prozesses aufweist, der in einem der Ansprüche 1 bis 11 definiert ist.

13. Computerprogramm gemäß Anspruch 12, das als eine Komponente eines Betriebssystems eingebettet ist.

14. Computerprogrammprodukt, das Programmcodeelemente zur Verteilung oder zum Fluten einer elektronischen Datei oder eines elektronischen Dokuments durch ein Telekommunikationsnetz aufweist und angeordnet ist, um folgende Schritte auszuführen:
a) Erzeugen (41) eines Pakets, das das elektronische Dokument oder die elektronische Datei aufweist, das bzw. die von einer Liste von Empfängern begleitet ist;
b) Senden (43) des Pakets an einen ersten Empfänger;
c) Extrahieren der Liste von Empfängern und Berechnen einer ersten Teilliste und einer zweiten Teilliste von Empfängern durch den ersten Empfänger;
d) Erzeugen (54) eines ersten Teilpakets, das die elektronische Datei oder das elektronische Dokument mit der ersten Teilliste aufweist, und Senden des ersten Teilpakets an einen zweiten Empfänger, der aus der ersten Teilliste identifiziert wird; **dadurch gekennzeichnet, dass**
e) ein zweites Teilpaket, das die elektronische Datei oder das elektronische Dokument mit der zweiten Teilliste aufweist, erzeugt wird (58) und das zweite Teilpaket durch den ersten Empfänger iterativ gemäß den Schritten (c) bis (e) verarbeitet wird.

15. Computerprogrammprodukt gemäß Anspruch 14, das ferner angeordnet ist, um folgende Schritte auszuführen:
(b') Empfangen (51) des Pakets, das das elektronische Dokument oder die elektronische Datei begleitet von einer Liste von Empfängern aufweist, an dem ersten Empfänger;
und wobei bei Schritt (d) der zweite Empfänger aus der ersten Teilliste als erreichbar identifiziert wird.

16. Ein Datenkommunikationsnetz, bei dem zumindest ein Teilsatz von Knoten Programmcodeelemente zum Ausführen eines Prozesses gemäß einem der Ansprüche 1 bis 11 aufweist.

## Revendications

1. Procédé pour distribuer par l'intermédiaire d'un réseau un message électronique associé à une liste de destinataires, ledit procédé comprenant l'application itérée des étapes consistant à :
a) extraire (54) au niveau d'un noeud (61) du réseau de ladite liste une première sous-liste et une seconde sous-liste de destinataires ;
b) identifier (55) un destinataire dans ladite première sous-liste qui peut être adressé via ledit réseau, et
c) transmettre (56) ledit message électronique et ladite première sous-liste audit destinataire identifié pour la poursuite de la distribution ; et
le procédé étant **caractérisé en ce que**
d) au niveau dudit noeud (61), lesdites étapes (a) à (d) sont appliquées à ladite seconde sous-liste de destinataires.

2. Procédé selon la revendication 1, comprenant la réception (51) du message et d'une liste de destinataires pour la poursuite de la distribution.

3. Procédé selon la revendication 1 ou la revendication 2, dans lequel ledit message et la liste de destinataires sont contenus dans un package, l'étape consistant à transmettre le message électronique au destinataire identifié (57) comprenant la génération d'un nouveau package comprenant le message électronique et la première sous-liste.

4. Procédé selon la revendication 3, dans lequel le package est un document XML.

5. Procédé selon la revendication 4, dans lequel ledit package électronique comprend des informations définissant la taille et la date de création dudit message électronique.

6. Procédé selon l'une quelconque des revendications précédentes, dans lequel l'extraction (54) desdites première et seconde sous-listes entraîne la génération de sous-listes de taille similaire.

7. Procédé selon l'une quelconque des revendications précédentes, dans lequel les première et seconde sous-listes comprennent ensemble tous les destinataires listés dans la liste de destinataires de laquelle ils sont extraits à l'étape (a).

8. Procédé selon l'une quelconque des revendications précédentes, dans lequel ladite transmission du message électronique est effectuée via un lien de protocole de transfert hypertexte.

9. Procédé selon l'une quelconque des revendications précédentes, dans lequel les étapes itérées (a) à (d) sont exécutées dans un seul noeud du réseau.

10. Procédé pour distribuer un message électronique associé à une liste de destinataires par l'intermédiaire d'un réseau comprenant l'exécution d'un procédé tel que revendiqué dans l'une quelconque des revendications précédentes dans une pluralité de noeuds du réseau lors de la réception au niveau de chacun de la pluralité de noeuds du message et d'une première sous-liste associée extraite dans un autre des noeuds jusqu'à ce que le message ait été transmis à tous les destinataires sur la liste.

11. Procédé selon la revendication 1, dans lequel la taille de la première sous-liste est égale à l'entier qui est immédiatement supérieur à la moitié du nombre d'articles de la liste de destinataires.

12. Agent de publication sous la forme d'un programme informatique ayant des éléments de code de programme pour exécuter le procédé défini dans l'une quelconque des revendications 1 à 11.

13. Programme informatique selon la revendication 12 intégré comme un composant d'un système d'exploitation.

14. Produit de programme informatique comprenant des éléments de code de programme pour la distribution ou l'inondation d'un fichier ou document électronique par l'intermédiaire d'un réseau de télécommunication, et agencé pour exécuter les étapes consistant à :
(a) générer (41) un package comprenant ledit fichier ou document électronique accompagné d'une liste de destinataires ;
(b) transmettre (43) ledit package à un premier destinataire ;
(c) ledit premier destinataire extrayant ladite liste de destinataires et calculant une première sous-liste et une seconde sous-liste de destinataires ;
(d) générer (54) un premier sous-package comprenant ledit fichier ou document électronique avec ladite première sous-liste et transmettre ledit premier sous-package à un second destinataire qui est identifié à partir de ladite première sous-liste ;
**caractérisé en ce que**
(e) un second sous-package comprenant ledit fichier ou document électronique avec ladite seconde sous-liste est généré (58) et ledit second sous-package est traité par ledit premier destinataire itérativement selon les étapes (c) à (e).

15. Produit de programme informatique selon la revendication 14, agencé en outre pour exécuter les étapes consistant à :
(b') recevoir (51) au niveau du premier destinataire ledit package comprenant ledit fichier ou document électronique accompagné d'une liste de destinataires ;
et dans lequel à l'étape (d) le second destinataire est identifié à partir de ladite première sous-liste comme étant joignable.

16. Réseau de communications de données dans lequel au moins un sous-ensemble de noeuds comprend des éléments de code de programme pour exécuter un procédé tel que revendiqué dans l'une quelconque des revendications 1 à 11.
